# EUROPEAN PATENT APPLICATION

(11) **EP 4 803 389 A1**
(43) Date of publication of application: **09.09.2026**
(21) Application number: 25161781.7
(22) Date of filing: 05.03.2025
(51) Int. Cl.: B60W 10/04, B60W 10/06, B60W 10/10, B60W 10/18, B60W 30/18, B60W 50/02

(54) **SYSTEM AND METHOD FOR CONTROLLING STOPPING SYSTEMS OF A VEHICLE**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE)
(74) Representative: Kransell & Wennborg KB

(57) **Abstract**

A computer system (100) comprising processing circuitry (102) configured to: in a vehicle having a primary stopping system (106) comprising friction brakes (108) and a transmission control unit (110), and a secondary stopping system (112) comprising a parking brake system (114) and a propulsion inhibition system (116), detect (200) a braking action indicating a request to decelerate the vehicle; obtain sensor data indicative of vehicle deceleration (202); determine (204), based on the obtained deceleration, whether the primary stopping system is achieving an expected stopping performance; and in response to determining that the vehicle deceleration is below a predefined threshold, activate (206) at least one component of the secondary stopping system to assist in stopping the vehicle.

## Description

### TECHNICAL FIELD

The disclosure relates generally to system and method for controlling stopping systems of a vehicle. In particular aspects, the disclosure relates to a control strategy for safely decelerating a vehicle having a primary and a secondary stopping system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Modern autonomous and semi-autonomous vehicles rely on various braking and propulsion control systems to ensure safe operation under different driving conditions. These systems are essential for maintaining vehicle stability, enabling controlled stops, and preventing unintended motion.

Braking systems generally include friction-based brakes, such as disc or drum brakes, which generate braking force through mechanical actuation. Additionally, propulsion control mechanisms can influence vehicle speed by regulating power delivery from the engine or disengaging the driveline. In many autonomous vehicle applications, these systems are electronically controlled and integrated with other vehicle subsystems to enhance performance, efficiency, and safety.

To improve reliability, autonomous vehicles often incorporate multiple braking and propulsion control systems, which may operate in coordination to provide redundancy in case one system becomes impaired or operates at reduced effectiveness. However, ensuring proper coordination between these systems, maintaining their effectiveness in various operational scenarios, and addressing potential faults remain ongoing challenges that require further refinement of stopping strategies.

### SUMMARY

According to a first aspect of the disclosure, it is provided a computer system comprising processing circuitry configured to: in a vehicle having a primary stopping system comprising friction brakes and a transmission control unit, and a secondary stopping system comprising a parking brake system and a propulsion inhibition system, detect a braking action indicating a request to decelerate the vehicle; obtain sensor data indicative of vehicle deceleration; and determine, based on the obtained deceleration, whether the primary stopping system is achieving an expected stopping performance; and in response to determining that the vehicle deceleration is below a predefined threshold, activate at least one component of the secondary stopping system to assist in stopping the vehicle.

The first aspect of the disclosure may seek to improve the reliability and effectiveness of vehicle stopping by dynamically coordinating a primary and a secondary stopping system based on real-time vehicle deceleration data. The computer system monitors whether the primary stopping system achieves an expected stopping performance and, if insufficient deceleration is detected, automatically activates at least one component of the secondary stopping system to assist in stopping the vehicle. A technical benefit may include enhanced safety by ensuring that the vehicle can reliably stop even if the primary stopping system is impaired. Additionally, the system may reduce unnecessary engagement of backup braking mechanisms, thereby minimizing wear and optimizing overall braking efficiency. The automated monitoring and intervention may further improve vehicle control and stability across different operating conditions.

Optionally, in some examples, including in at least one preferred example, the braking action is initiated in response to a braking request from an autonomous driving system or a manual emergency stop command. A technical benefit may include ensuring that the braking action is triggered in response to both autonomous and manual emergency interventions which may be actuated by an operator of the vehicle, enhancing the system's ability to respond appropriately to different driving scenarios. This may improve overall vehicle safety by providing redundancy in braking activation mechanisms.

Optionally, in some examples, including in at least one preferred example, the predefined threshold for deceleration is pre-stored or dynamically adjusted based on acquired vehicle parameters including at least one of vehicle load, road conditions, and environmental factors. A technical benefit may include improving braking performance across various operating conditions by dynamically adjusting the deceleration threshold based on real-time vehicle parameters. This allows for adaptive stopping behavior, optimizing both safety and efficiency based on factors such as load, road conditions, and environmental influences such as weather, temperature and traffic situation.

Optionally, in some examples, including in at least one preferred example, the processing circuitry is further configured to: in response to determining that the vehicle deceleration indicates that the vehicle remains in motion despite activation of the primary stopping system, activate the parking brake system of the secondary stopping system.

A technical benefit may include increasing braking reliability by engaging the parking brake system when the primary stopping system fails to sufficiently decelerate the vehicle. This ensures that the vehicle can come to a stop even in cases where the primary stopping system is unable to achieve the desired braking performance.

Optionally, in some examples, including in at least one preferred example, the processing circuitry is further configured to activate the parking brake system of the secondary stopping system by controlling at least one valve arranged to evacuate air from a pneumatic parking brake circuit, thereby engaging the parking brake. A technical benefit may include enabling effective activation of the parking brake system by ensuring that it can be engaged through a controlled pneumatic mechanism. This allows for a fail-safe and robust method of stopping the vehicle by utilizing existing pneumatic braking infrastructure.

Optionally, in some examples, including in at least one preferred example, the at least one valve of the parking brake system is configured to be actively closed such that, in the event of a power loss or control failure, the valve opens to engage the parking brake. A technical benefit may include improving system reliability by ensuring that the parking brake system engages automatically in the event of a failure. This fail-safe design enhances safety by preventing uncontrolled vehicle movement if power or control is lost.

Optionally, in some examples, including in at least one preferred example, the processing circuitry is further configured to: in response to determining that the vehicle deceleration indicates that the vehicle remains in motion despite activation of the primary stopping system, activate the propulsion inhibition system of the secondary stopping system. A technical benefit may include ensuring that vehicle motion is effectively halted by utilizing an additional stopping mechanism beyond braking force alone. By inhibiting propulsion, the system enhances the stopping capability in scenarios where braking alone may not be sufficient.

Optionally, in some examples, including in at least one preferred example, the processing circuitry is further configured to: obtain sensor data indicative of engine torque and driveline engagement status; obtain sensor data indicative of a braking torque of the primary stopping system; and in response to determining that the engine torque exceeds the braking torque, and that the acquired driveline engagement status indicates that the driveline is engaged, control the transmission control unit of the primary stopping system to disengage the driveline. A technical benefit may include preventing situations where engine torque overcomes braking force, ensuring that the vehicle can effectively decelerate. By disengaging the driveline when necessary, the system eliminates forward-driving forces that could otherwise impede stopping.

Optionally, in some examples, including in at least one preferred example, the processing circuitry is further configured to estimate a braking torque based on: static vehicle properties; and a current braking request. A technical benefit may include improving the accuracy of braking torque assessment without relying solely on sensor readings. By incorporating known static vehicle properties and braking requests, the system can estimate stopping performance more effectively and make informed decisions on braking interventions. A further benefit of estimating the braking torque based on static vehicle properties is the reduced number of sensors required in the braking systems for determining a braking torque, thereby reducing cost.

Optionally, in some examples, including in at least one preferred example, the static vehicle properties are selected from the group comprising: number of vehicle axles, stopping system type, and number of braked wheels. A technical benefit may include refining braking torque estimations by considering specific vehicle configurations. This ensures that stopping behavior is adjusted according to structural characteristics, leading to more reliable and predictable deceleration responses.

Optionally, in some examples, including in at least one preferred example, the processing circuitry is further configured to: obtain sensor data indicative of driveline engagement status; and in response to determining that the driveline engagement status indicates that the driveline remains engaged despite a disengagement request, activate the propulsion inhibition system of the secondary stopping system by cutting power to an engine management system. A technical benefit may include ensuring that propulsion is effectively halted in cases where a driveline disengagement request fails. By cutting power to the engine management system, the system provides a secondary means of stopping the vehicle when mechanical disengagement is insufficient.

Optionally, in some examples, including in at least one preferred example, the processing circuitry is further configured to cut power to an engine management system by opening a relay. A technical benefit may include providing a simple and effective method for inhibiting propulsion by utilizing an electrical relay mechanism. This approach allows for rapid intervention in emergency stopping scenarios where cutting engine power is necessary. Optionally, in some examples, including in at least one preferred example, the relay is configured to be actively closed so that a loss of power to or control of the relay results in opening of the relay. A technical benefit may include enhancing fail-safe functionality by ensuring that propulsion inhibition occurs automatically if the relay loses power or control. This design increases the system's robustness by preventing unintended vehicle movement in failure scenarios.

Optionally, in some examples, including in at least one preferred example, the processing circuitry is further configured to acquire a vehicle deceleration from an inertial measurement unit (IMU) or a vehicle speed sensor. A technical benefit may include improving the accuracy and redundancy of deceleration measurements by allowing data collection from multiple sources. This ensures that stopping performance assessments remain reliable even if one measurement method becomes unavailable or compromised.

Optionally, in some examples, including in at least one preferred example, the processing circuitry is further configured to: obtain data indicative of a fault in the primary stopping system; and in response to the fault in the primary stopping system, activate at least one component of the secondary stopping system to assist in stopping the vehicle. A technical benefit may include enhancing system safety by ensuring that stopping capability is maintained even in the event of a primary stopping system fault. This redundancy helps prevent accidents by ensuring that a secondary system is always available to provide braking intervention when needed.

There is also provided a vehicle comprising the computer system of any the aforementioned examples. A technical benefit may include integrating the described computer system directly into a vehicle, ensuring seamless operation of the stopping strategy with the vehicle's braking and propulsion systems. This enables autonomous or semi-autonomous vehicles to effectively monitor and control stopping performance, enhancing safety and reliability.

Optionally, in some examples, including in at least one preferred example, the vehicle further comprises a primary stopping system comprising friction brakes and a transmission control unit, and a secondary stopping system comprising a parking brake system and a propulsion inhibition system. A technical benefit may include providing a structured braking architecture within the vehicle, ensuring that the stopping strategy is implemented using both a primary and a secondary stopping system. This dual-system approach enhances redundancy and robustness, allowing for controlled and reliable vehicle deceleration under various conditions.

According to a second aspect of the disclosure, A computer-implemented method, comprising: obtaining, by processing circuitry of a computer system, data indicative of a braking action indicating a request to decelerate a vehicle having a primary stopping system comprising friction brakes and a transmission control unit, and a secondary stopping system comprising a parking brake system and a propulsion inhibition system; obtaining sensor data indicative of vehicle deceleration; determining, by the processing circuitry and based on the monitored deceleration, whether the primary stopping system is achieving an expected stopping performance; and activating, by the processing circuitry and in response to determining that the vehicle deceleration is below a predefined threshold, at least one component of the secondary stopping system to assist in stopping the vehicle.

The disclosed aspects, examples (including any preferred examples), and/or accompanying examples may be suitably combined with each other as would be apparent to anyone of ordinary skill in the art. Additional features and advantages are disclosed in the following description, examples, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary system diagram of a computer system.
Fig. 2 is an exemplary block diagram illustrating functionality of a computer system.
Fig. 3 is an exemplary block diagram illustrating functionality of a computer system.
Fig. 4 is an exemplary block diagram illustrating functionality of a computer system.
Fig. 5 is an exemplary block diagram illustrating functionality of a computer system.
Fig. 6 is an exemplary block diagram illustrating functionality of a computer system.
Fig. 7 is a flow chart of an exemplary computer-implemented method according to an example.
Fig. 8 is a vehicle comprising an exemplary computer system.
Fig. 9 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

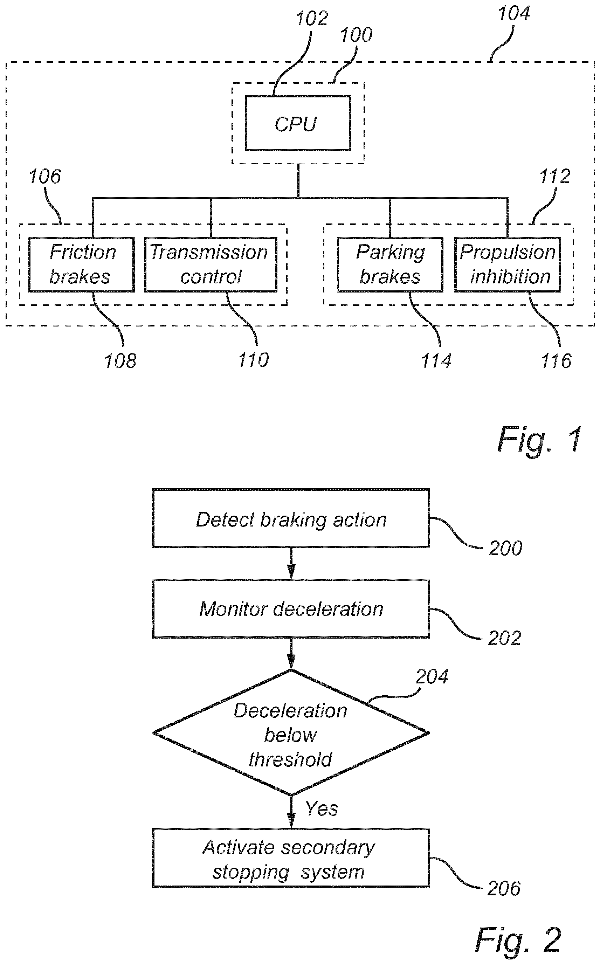

The computer system 100, as illustrated in the system diagram of Fig. 1, comprises processing circuitry 102 configured to control vehicle stopping functions by coordinating a primary stopping system 106 and a secondary stopping system 112. The primary stopping system 106 includes friction brakes 108, which provide braking force by generating friction, and a transmission control unit 110, which can regulate the driveline to influence vehicle speed. The secondary stopping system 112 comprises a parking brake system 114, which is arranged to mechanically secure the vehicle in a stationary position, and a propulsion inhibition system 116, which is configured to prevent further power delivery from the engine to the wheels. By incorporating both primary and secondary stopping systems, the vehicle ensures reliable stopping functionality under various conditions.

As shown in the schematic block diagram of Fig. 2, the computer system 100 is configured to detect a braking action 200, which indicates a request to decelerate the vehicle. This request may originate from an autonomous driving system or a manual emergency stop command. Upon detecting the braking action 200, the system obtains 202 sensor data indicative of vehicle deceleration. This data may be acquired from various sensors, such as an inertial measurement unit (IMU) or wheel speed sensors, to assess the vehicle's actual rate of deceleration.

The processing circuitry 102 is further configured to determine vehicle deceleration using the acquired sensor data. The IMU provides acceleration and orientation data, allowing the system to compute deceleration in real time by analyzing changes in vehicle velocity. Alternatively, a vehicle speed sensor, such as a wheel speed sensor, can measure rotational speed and derive deceleration by calculating the rate of change of velocity over time. Deceleration can also be measured by determining vehicle speed from additional sources, including driveshaft rotation sensors, wheel speed sensors, or external positioning systems such as GNSS. Furthermore, advanced perception sensors, including lidar or radar, may be used to track vehicle motion relative to stationary objects or the road surface, further improving the accuracy of deceleration measurements. By integrating multiple sensor sources, the system enhances reliability and ensures precise monitoring of vehicle stopping performance under varying conditions.

The processing circuitry 102 then determines 204, whether the primary stopping system 106 is achieving an expected stopping performance. This determination 204 involves comparing the measured deceleration to a predefined deceleration threshold. If the deceleration is determined to be below this deceleration threshold, indicating insufficient braking effectiveness, the processing circuitry 102 activates 206 at least one component of the secondary stopping system 112 to assist in stopping the vehicle. Depending on the specific conditions, this may involve engaging the parking brake system 114 by controlling pneumatic valves to apply the brakes, or activating the propulsion inhibition system 116 to cut power to the engine and prevent further movement. By continuously monitoring braking performance and dynamically engaging secondary stopping mechanisms when necessary, the computer system 100 enhances the vehicle's ability to stop safely, even in the event of a failure or degraded performance of the primary stopping system 106.

As illustrated in Fig. 2, the braking action 202 is initiated in response to a braking request from an autonomous driving system or a manual emergency stop command. The autonomous driving system may issue such a request based on predefined stopping criteria, such as approaching an obstacle, reaching a designated stopping location, or responding to emergency conditions. Alternatively, a manual emergency stop command may be issued by a remote operator or a safety system override. By enabling both autonomous and manual triggering of the braking action 202, the computer system 100 ensures flexibility in responding to various operational scenarios.

The predefined threshold for deceleration is pre-stored or dynamically adjusted based on acquired vehicle parameters, including at least one of vehicle load, road conditions, and environmental factors. The predefined threshold serves as a reference for determining whether the primary stopping system 106, comprising friction brakes 108 and a transmission control unit 110, is achieving the expected stopping performance. In some implementations, the threshold may be a fixed value based on regulatory or design specifications. However, in other implementations, the threshold may be dynamically adapted based on real-time data from onboard sensors. Vehicle load sensors may adjust the threshold based on cargo weight, ensuring that braking effectiveness is assessed appropriately for different vehicle configurations. Road condition sensors or external data sources may provide information about surface traction, enabling adjustments to the threshold based on weather conditions such as rain, snow, or ice. Environmental factors such as slope inclination may also influence the expected deceleration, ensuring that braking assessments are contextually relevant. By dynamically adjusting the predefined threshold, the processing circuitry 102 enhances the adaptability of the system to varying operational conditions, thereby improving stopping performance.

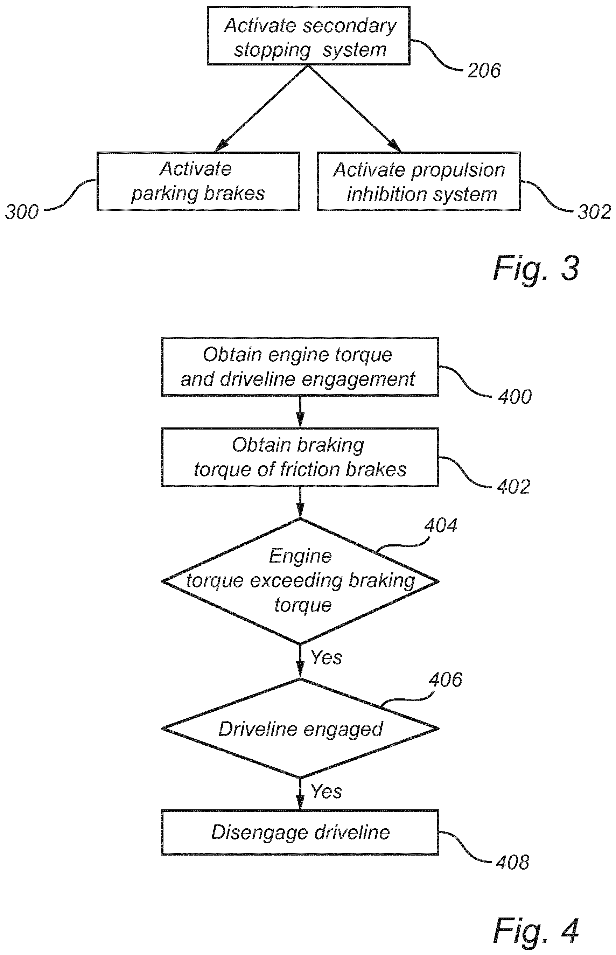

As illustrated in Fig. 2, if the processing circuitry 102 determines that the vehicle deceleration is below a predefined threshold despite activation of the primary stopping system 106, the computer system 100 activates the parking brake system 114 of the secondary stopping system 112 at step 300 illustrated in Fig. 3. The parking brake system 114 provides an additional braking force by mechanically braking the vehicle. This activation ensures that the vehicle is brought to a stop even in cases where the primary stopping system 106, comprising friction brakes 108 and the transmission control unit 110, is unable to achieve the expected stopping performance.

The processing circuitry 102 is further configured to activate the parking brake system 114 by controlling at least one valve arranged to evacuate air from a pneumatic parking brake circuit, thereby engaging the parking brake. In a typical pneumatic braking system, the parking brake is held in a disengaged state by pressurized air. By releasing the air pressure in the parking brake circuit, the system applies mechanical force to engage the brake. This approach ensures a reliable method of vehicle stopping, leveraging the inherent design of pneumatic braking systems to achieve a secure halt when necessary. The at least one valve of the parking brake system 114 may be configured to be actively closed such that, in the event of a power loss or control failure, the valve opens to engage the parking brake. This configuration ensures a fail-safe mechanism, wherein any loss of electrical or pneumatic control automatically results in the engagement of the parking brake. By implementing this design, the system enhances vehicle safety by preventing unintended motion in the event of a system failure. This functionality is particularly important in autonomous vehicle applications where manual intervention may not be immediately available.

As further illustrated in Fig. 3, the processing circuitry 102 is configured to activate 302 the propulsion inhibition system 116 of the secondary stopping system 112 in response to determining that the vehicle deceleration remains below the predefined threshold despite activation of the primary stopping system 106. The propulsion inhibition system 116 prevents further power delivery from the engine to the wheels, ensuring that no additional driving force counteracts braking efforts. This may involve disabling fuel injection or cutting electrical power to the engine management system. By incorporating propulsion inhibition alongside braking intervention, the computer system 100 ensures that the vehicle can be reliably stopped under various failure conditions.

As illustrated in Fig. 4, the processing circuitry 102 is configured to obtain sensor data 400 indicative of engine torque and driveline engagement status. The engine torque represents the force generated by the engine that contributes to vehicle propulsion, while the driveline engagement status indicates whether power is being transmitted to the wheels. Additionally, the processing circuitry 102 obtains sensor data 402 indicative of a braking torque of the primary stopping system 106. The braking torque represents the force applied by the friction brakes 108 to decelerate the vehicle.

At step 404 in Fig. 4, the processing circuitry 102 determines whether the obtained engine torque exceeds the braking torque. If the engine torque is greater than the braking torque, the vehicle may continue moving forward despite the activation of the primary stopping system 106. The processing circuitry 102 further evaluates, at step 406, whether the driveline remains engaged, meaning that the transmission is still allowing power to be transmitted from the engine to the wheels. If both conditions are met, the processing circuitry 102 controls the transmission control unit 110 to disengage 408 the driveline, thereby interrupting power transmission and allowing the braking force to more effectively slow or stop the vehicle. Even though the systems and stopping strategy are described to stop a vehicle moving in a forward direction, the described examples are equally applicable for stopping a vehicle moving in the reverse direction.

To accurately assess braking torque, the processing circuitry 102 may be further configured to estimate a braking torque based on static vehicle properties and a current braking request. Static vehicle properties may include predefined characteristics that influence braking performance, such as the number of vehicle axles, the type of stopping system used, and the number of braked wheels. By incorporating these static parameters, the system can refine its assessment of expected braking performance and determine whether the braking torque is sufficient to counteract engine torque.

The static vehicle properties that may be used to estimate braking torque are selected from the group comprising the number of vehicle axles, the stopping system type, and the number of braked wheels. The number of vehicle axles affects weight distribution and braking force allocation, while the stopping system type defines whether braking is achieved through pneumatic, hydraulic, or electric mechanisms. The number of braked wheels determines the total available braking force. By considering these parameters, the processing circuitry 102 can improve the accuracy of braking torque estimation, leading to more precise control over stopping maneuvers. It would also be possible to estimate a braking torque in response to one or more measured pressures in the brake chambers.

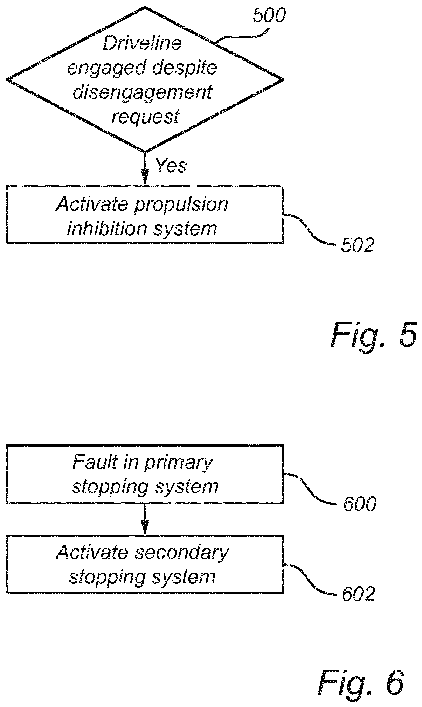

As further illustrated in Fig. 5, the processing circuitry 102 is configured to obtain sensor data indicative of driveline engagement status. The driveline engagement status provides information about whether the transmission control unit 110 has successfully disengaged the driveline, thereby preventing power transmission from the engine to the wheels. The processing circuitry 102 determines 500 whether the driveline remains engaged despite a disengagement request. In some instances, mechanical faults, communication failures, or hydraulic or pneumatic issues within the transmission system may prevent successful disengagement. If the driveline remains engaged despite a command to disengage, propulsion may still be transmitted to the wheels, counteracting braking efforts.

To ensure that the vehicle stops effectively, the processing circuitry 102 activates 502 the propulsion inhibition system 116 of the secondary stopping system 112 by cutting power to an engine management system. This action overrides normal engine control functions, ensuring that no further torque is produced, thereby preventing unintended propulsion. The processing circuitry 102 may be configured to cut power to the engine management system by opening a relay. The relay serves as an electrically controlled switch that interrupts the power supply to critical engine components, effectively disabling engine operation and preventing further propulsion. To enhance system reliability, the relay may be configured to be actively closed such that a loss of power to or control of the relay results in opening of the relay. This fail-safe mechanism ensures that if a failure occurs in the electrical control system, the propulsion inhibition function is still executed, preventing unintended vehicle movement. By designing the relay to default to an open state in the event of a fault, the system ensures that propulsion is inhibited under all failure conditions, improving overall vehicle safety and stopping reliability.

As illustrated in Fig. 6, the processing circuitry 102 is configured to obtain data 600 indicative of a fault in the primary stopping system 106. This data may be derived from various sources, including onboard diagnostic systems, sensor feedback, or communication signals from braking system controllers. A fault in the primary stopping system 106 may include degraded braking performance, hydraulic or pneumatic failures, overheating of the friction brakes 108, or loss of communication with the transmission control unit 110.

Upon detecting a fault in the primary stopping system 106, the processing circuitry 102 activates 602 at least one component of the secondary stopping system 112. Depending on the nature of the fault, this may involve engaging the parking brake system 114 by controlling at least one valve to evacuate air from the parking brake circuit, or activating the propulsion inhibition system 116 to prevent further power transmission to the wheels. By implementing this fault-response mechanism, the computer system 100 ensures that the vehicle can be safely brought to a stop even if the primary stopping system 106 is impaired.

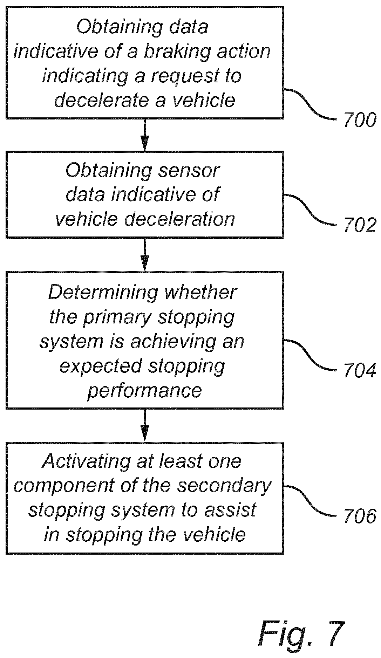

Fig. 7 is a flow chart of a computer-implemented method for controlling deceleration of a vehicle. The method comprises obtaining 700, by processing circuitry 102 of a computer system 100, data indicative of a braking action 202 indicating a request to decelerate a vehicle having a primary stopping system 106 comprising friction brakes 108 and a transmission control unit 110, and a secondary stopping system 112 comprising a parking brake system 114 and a propulsion inhibition system 116; obtaining 702 sensor data indicative of vehicle deceleration; determining 704, by the processing circuitry 102 and based on the monitored deceleration, whether the primary stopping system 106 is achieving an expected stopping performance; and activating 706, by the processing circuitry 102 and in response to determining that the vehicle deceleration is below a predefined threshold, at least one component of the secondary stopping system 112 to assist in stopping the vehicle.

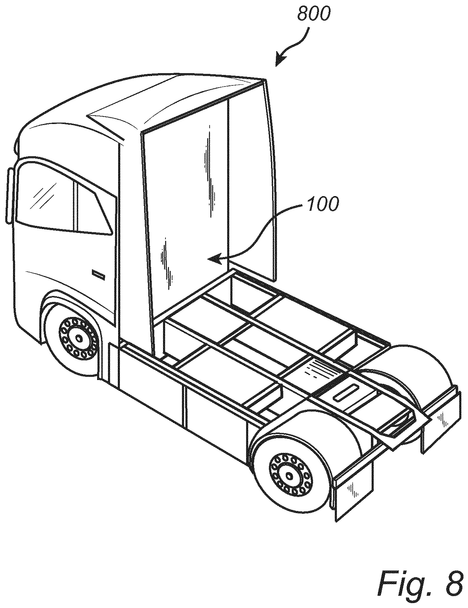

Fig. 8 illustrates a vehicle 800 comprising the computer system 100 as described in any of the preceding examples. The computer system 100, including the processing circuitry 102, is integrated into the vehicle 800 to control its stopping functions by managing both a primary stopping system 106 and a secondary stopping system 112. The integration of the computer system 100 enables continuous monitoring of braking performance and dynamic intervention when necessary to ensure reliable stopping under various operating conditions.

The vehicle 800 further comprises a primary stopping system 106, which includes friction brakes 108 and a transmission control unit 110. The friction brakes 108 provide braking force by generating friction between braking components, while the transmission control unit 110 regulates the driveline to assist in deceleration by disengaging power transmission when required. In addition, the vehicle 800 includes a secondary stopping system 112 comprising a parking brake system 114 and a propulsion inhibition system 116. The parking brake system 114 is arranged to apply mechanical braking force, typically by controlling pneumatic valves to engage the brakes, ensuring the vehicle remains stationary when required. The propulsion inhibition system 116 prevents further power delivery from the engine to the wheels, which may involve cutting power to the engine management system or disengaging the driveline. By incorporating both a primary stopping system 106 and a secondary stopping system 112, the vehicle 800 ensures redundancy and enhanced stopping reliability, particularly in scenarios where the primary stopping system 106 experiences faults or reduced

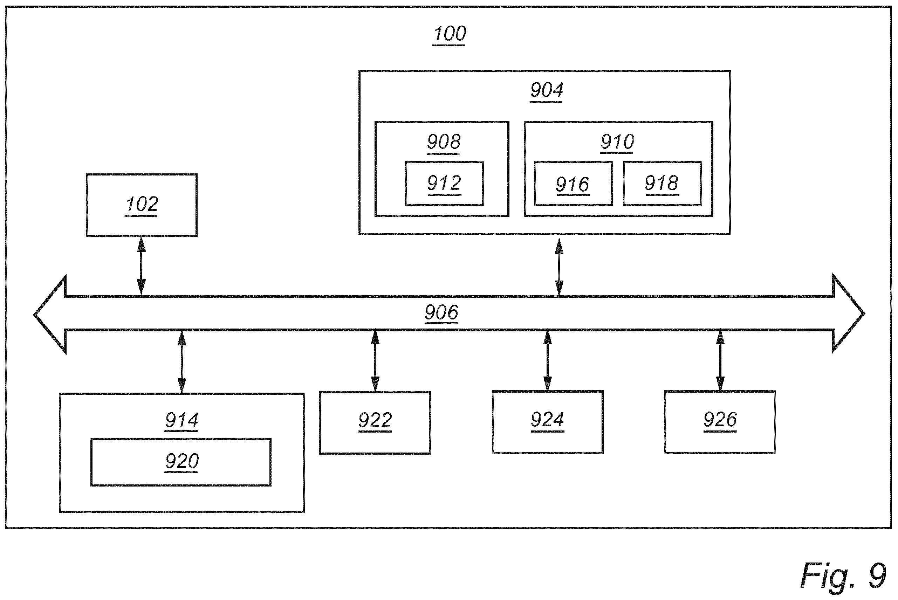

**FIG. 9** is a schematic diagram of a computer system 100 for implementing examples disclosed herein. The computer system 100 is adapted to execute instructions from a computer-readable medium to perform these and/or any of the functions or processing described herein. The computer system 100 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or examples to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 102 (e.g., processing circuitry including one or more processor devices or control units), a memory 904, and a system bus 906. The computer system 100 may include at least one computing device having the processing circuitry 102. The system bus 906 provides an interface for system components including, but not limited to, the memory 904 and the processing circuitry 102. The processing circuitry 102 may include any number of hardware components for conducting data or signal processing or for executing computer code stored in memory 904. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 102 may further include computer executable code that controls operation of the programmable device.

The system bus 906 may be any of several types of bus structures that may further interconnect to a memory bus (with or without a memory controller), a peripheral bus, and/or a local bus using any of a variety of bus architectures. The memory 904 may be one or more devices for storing data and/or computer code for completing or facilitating methods described herein. The memory 904 may include database components, object code components, script components, or other types of information structure for supporting the various activities herein. Any distributed or local memory device may be utilized with the systems and methods of this description. The memory 904 may be communicably connected to the processing circuitry 102 (e.g., via a circuit or any other wired, wireless, or network connection) and may include computer code for executing one or more processes described herein. The memory 904 may include non-volatile memory 908 (e.g., read-only memory (ROM), erasable programmable read-only memory (EPROM), electrically erasable programmable read-only memory (EEPROM), etc.), and volatile memory 910 (e.g., random-access memory (RAM)), or any other medium which can be used to carry or store desired program code in the form of machine-executable instructions or data structures and which can be accessed by a computer or other machine with processing circuitry 102. A basic input/output system (BIOS) 912 may be stored in the non-volatile memory 908 and can include the basic routines that help to transfer information between elements within the computer system 100.

The computer system 100 may further include or be coupled to a non-transitory computer-readable storage medium such as the storage device 914, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 914 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 914 and/or in the volatile memory 910, which may include an operating system 916 and/or one or more program modules 918. All or a portion of the examples disclosed herein may be implemented as a computer program 920 stored on a transitory or non-transitory computer-usable or computer-readable storage medium (e.g., single medium or multiple media), such as the storage device 914, which includes complex programming instructions (e.g., complex computer-readable program code) to cause the processing circuitry 102 to carry out actions described herein. Thus, the computer-readable program code of the computer program 920 can comprise software instructions for implementing the functionality of the examples described herein when executed by the processing circuitry 102. In some examples, the storage device 914 may be a computer program product (e.g., readable storage medium) storing the computer program 920 thereon, where at least a portion of a computer program 920 may be loadable (e.g., into a processor) for implementing the functionality of the examples described herein when executed by the processing circuitry 102. The processing circuitry 102 may serve as a controller or control system for the computer system 100 that is to implement the functionality described herein.

The computer system 100 may include an input device interface 922 configured to receive input and selections to be communicated to the computer system 100 when executing instructions, such as from a keyboard, mouse, touch-sensitive surface, etc. Such input devices may be connected to the processing circuitry 102 through the input device
interface 922 coupled to the system bus 906 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 924 configured to forward output, such as to a display, a video display unit (e.g., a liquid crystal display (LCD) or a cathode ray tube (CRT)). The computer system 100 may include a communications interface 926 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system (100) comprising processing circuitry (102) configured to: in a vehicle having a primary stopping system (106) comprising friction brakes (108) and a transmission control unit (110), and a secondary stopping system (112) comprising a parking brake system (114) and a propulsion inhibition system (116), detect (200) a braking action indicating a request to decelerate the vehicle; obtain sensor data indicative of vehicle deceleration (202); determine (204), based on the obtained deceleration, whether the primary stopping system is achieving an expected stopping performance; and in response to determining that the vehicle deceleration is below a predefined threshold, activate (206) at least one component of the secondary stopping system to assist in stopping the vehicle.

Example 2. The computer system (100) of example 1, wherein the braking action is initiated in response to a braking request from an autonomous driving system or a manual emergency stop command.

Example 3. The computer system (100) of example 1 or 2, wherein the predefined threshold for deceleration is pre-stored or dynamically adjusted based on acquired vehicle parameters including at least one of vehicle load, road conditions, and environmental factors.

Example 4. The computer system (100) of any of examples 1 to 3, wherein the processing circuitry (102) is further configured to: in response to determining that the vehicle deceleration indicates that the vehicle remains in motion despite activation of the primary stopping system, activate (300) the parking brake system of the secondary stopping system.

Example 5. The computer system (100) of example 4, wherein the processing circuitry (102) is further configured to activate the parking brake system of the secondary stopping system by controlling at least one valve arranged to evacuate air from a pneumatic parking brake circuit, thereby engaging the parking brake.

Example 6. The computer system (100) of example 5, wherein the at least one valve of the parking brake system is configured to be actively closed such that, in the event of a power loss or control failure, the valve opens to engage the parking brake.

Example 7. The computer system (100) of any of the preceding examples, wherein the processing circuitry (102) is further configured to: in response to determining that the vehicle deceleration indicates that the vehicle remains in motion despite activation of the primary stopping system, activate (302) the propulsion inhibition system of the secondary stopping system.

Example 8. The computer system (100) of any of the preceding examples, wherein the processing circuitry (102) is further configured to: obtain (400) sensor data indicative of engine torque and driveline engagement status; obtain (402) sensor data indicative of a braking torque of the primary stopping system; and in response to determining that the engine torque exceeds the braking torque (404), and that the acquired driveline engagement status indicates that the driveline is engaged (406), control the transmission control unit of the primary stopping system to disengage (408) the driveline.

Example 9. The computer system (100) of example 8, wherein the processing circuitry (102) is further configured to estimate a braking torque based on: static vehicle properties; and a current braking request.

Example 10. The computer system (100) of example 9, wherein the static vehicle properties are selected from the group comprising: number of vehicle axles, stopping system type, and number of braked wheels.

Example 11. The computer system (100) of any of the examples 8 to 10, wherein the processing circuitry (102) is further configured to: obtain sensor data indicative of driveline engagement status; and in response to determining that the driveline engagement status indicates that the driveline remains engaged despite a disengagement request (500), activate (502) the propulsion inhibition system of the secondary stopping system by cutting power to an engine management system.

Example 12. The computer system (100) of example 11, wherein the processing circuitry (102) is further configured to cut power to an engine management system by opening a relay.

Example 13. The computer system (100) of example 12, wherein the relay is configured to be actively closed so that a loss of power to or control of the relay result in opening of the relay.

Example 14. The computer system (100) of any of the preceding examples, wherein the processing circuitry (102) is further configured to acquire a vehicle deceleration from an inertial measurement unit (IMU) or a vehicle speed sensor.

Example 15. The computer system (100) of any of the preceding examples, wherein the processing circuitry (102) is further configured to: obtain (600) data indicative of a fault in the primary stopping system; and in response to the fault in the primary stopping system, activate (602) at least one component of the secondary stopping system to assist in stopping the vehicle.

Example 16. A vehicle (800) comprising the computer system of any of examples 1 to 15.

Example 17. The vehicle according to example 16, further comprising: a primary stopping system comprising friction brakes and a transmission control unit; and a secondary stopping system comprising a parking brake system and a propulsion inhibition system.

Example 18. A computer-implemented method, comprising: obtaining (700), by processing circuitry of a computer system (100), data indicative of a braking action indicating a request to decelerate a vehicle having a primary stopping system comprising friction brakes and a transmission control unit, and a secondary stopping system comprising a parking brake system and a propulsion inhibition system; obtaining (702) sensor data indicative of vehicle deceleration; determining (704), by the processing circuitry and based on the monitored deceleration, whether the primary stopping system is achieving an expected stopping performance; and activating (706), by the processing circuitry and in response to determining that the vehicle deceleration is below a predefined threshold, at least one component of the secondary stopping system to assist in stopping the vehicle.

Example 19. A computer program product comprising program code for performing, when executed by the processing circuitry, the method of example 18.

Example 20. A non-transitory computer-readable storage medium comprising instructions, which when executed by the processing circuitry, cause the processing circuitry to perform the method of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended examples. In the drawings and specification, there have been disclosed aspects for purposes of illustration only and not for purposes of limitation, the scope of the disclosure being set forth in the following examples.

## Claims

1. A computer system (100) comprising processing circuitry (102) configured to:
in a vehicle having a primary stopping system (106) comprising friction brakes (108) and a transmission control unit (110), and a secondary stopping system (112) comprising a parking brake system (114) and a propulsion inhibition system (116), detect (200) a braking action indicating a request to decelerate the vehicle;
obtain sensor data indicative of vehicle deceleration (202);
determine (204), based on the obtained deceleration, whether the primary stopping system is achieving an expected stopping performance; and
in response to determining that the vehicle deceleration is below a predefined threshold, activate (206) at least one component of the secondary stopping system to assist in stopping the vehicle.

2. The computer system (100) of claim 1, wherein the braking action is initiated in response to a braking request from an autonomous driving system or a manual emergency stop command.

3. The computer system (100) of claim 1 or 2, wherein the predefined threshold for deceleration is pre-stored or dynamically adjusted based on acquired vehicle parameters including at least one of vehicle load, road conditions, and environmental factors.

4. The computer system (100) of any of claims 1 to 3, wherein the processing circuitry (102) is further configured to:
in response to determining that the vehicle deceleration indicates that the vehicle remains in motion despite activation of the primary stopping system, activate (300) the parking brake system of the secondary stopping system.

5. The computer system (100) of claim 4, wherein the processing circuitry (102) is further configured to activate the parking brake system of the secondary stopping system by controlling at least one valve arranged to evacuate air from a pneumatic parking brake circuit, thereby engaging the parking brake.

6. The computer system (100) of any of the preceding claims, wherein the processing circuitry (102) is further configured to:
in response to determining that the vehicle deceleration indicates that the vehicle remains in motion despite activation of the primary stopping system, activate (302) the propulsion inhibition system of the secondary stopping system.

7. The computer system (100) of any of the preceding claims, wherein the processing circuitry (102) is further configured to:
obtain (400) sensor data indicative of engine torque and driveline engagement status;
obtain (402) sensor data indicative of a braking torque of the primary stopping system; and
in response to determining that the engine torque exceeds the braking torque (404), and that the acquired driveline engagement status indicates that the driveline is engaged (406), control the transmission control unit of the primary stopping system to disengage (408) the driveline.

8. The computer system (100) of claim 7, wherein the processing circuitry (102) is further configured to estimate a braking torque based on:
static vehicle properties; and
a current braking request.

9. The computer system (100) of claim 8, wherein the static vehicle properties are selected from the group comprising: number of vehicle axles, stopping system type, and number of braked wheels.

10. The computer system (100) of any of the claims 7 to 9, wherein the processing circuitry (102) is further configured to:
obtain sensor data indicative of driveline engagement status; and
in response to determining that the driveline engagement status indicates that the driveline remains engaged despite a disengagement request (500), activate (502) the propulsion inhibition system of the secondary stopping system by cutting power to an engine management system.

11. The computer system (100) of any of the preceding claims, wherein the processing circuitry (102) is further configured to acquire a vehicle deceleration from an inertial measurement unit (IMU) or a vehicle speed sensor.

12. A vehicle (800) comprising the computer system of any of claims 1 to 11.

13. A computer-implemented method, comprising:
obtaining (700), by processing circuitry of a computer system (100), data indicative of a braking action indicating a request to decelerate a vehicle having a primary stopping system comprising friction brakes and a transmission control unit, and a secondary stopping system comprising a parking brake system and a propulsion inhibition system;
obtaining (702) sensor data indicative of vehicle deceleration;
determining (704), by the processing circuitry and based on the monitored deceleration, whether the primary stopping system is achieving an expected stopping performance; and
activating (706), by the processing circuitry and in response to determining that the vehicle deceleration is below a predefined threshold, at least one component of the secondary stopping system to assist in stopping the vehicle.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
